# EUROPEAN PATENT APPLICATION

(11) **EP 3 852 452 A1**
(43) Date of publication of application: **21.07.2021**
(21) Application number: 20742010.0
(22) Date of filing: 16.01.2020
(51) Int. Cl.: H04W 68/00

(54) **METHOD AND DEVICE FOR DISPLAYING NOTIFICATION INFORMATION**

(30) Priority: 18.01.2019 CN 201910108916
(71) Applicant: HUAWEI TECHNOLOGIES CO., LTD., Shenzhen, Guangdong 518129 (CN)
(72) Inventor: LEI, Xiantiao, Shenzhen, Guangdong 518129 (CN); LIU, Tao, Shenzhen, Guangdong 518129 (CN); LI, Hong, Shenzhen, Guangdong 518129 (CN); SUN, Bing, Shenzhen, Guangdong 518129 (CN); SHU, Lin, Shenzhen, Guangdong 518129 (CN)
(74) Representative: Pfenning, Meinig & Partner mbB
(86) International application number: PCT/CN2020/072449
(87) International publication number: WO 2020/147783

(57) **Abstract**

This application provides a communication method and a terminal apparatus. The communication method includes: receiving, by a terminal apparatus, first notification information, where the first notification information includes first area information; when the terminal apparatus is not in a first area indicated by the first area information, skipping indicating, by the terminal apparatus to a user, notification content indicated by the first notification information; and when the terminal apparatus is moved to the first area within a preset time period, indicating, by the terminal apparatus to the user, the notification content indicated by the first notification information.

## Description

### TECHNICAL FIELD

This application relates to the field of wireless communications technologies, and in particular, to a notification information presentation method and apparatus in a wireless communications system.

### BACKGROUND

An optional information element, to be specific, warning area coordinates (warning area coordinates), is added to cell broadcast service (cell broadcast service, CBS) warning information in 4G and 5G. UE receives the CBS warning information, where the CBS warning information carries the information element. If the UE determines that its location is not within a range of the warning area coordinates, the UE does not need to present the warning information to the user. Otherwise, the UE presents the warning information to the user. When warning information is received within a duplication detection period, if both a message identifier (message ID) and a serial number (serial number) in the warning information are the same as those in previously received warning information, the UE considers the warning information as duplicate warning information, and needs to ignore the warning information.

When the UE receives warning information outside a range of the warning area coordinates, the UE does not present the warning information to the user. When the UE is moved to the range of the warning area coordinates, the UE receives warning information again. Due to a duplication detection mechanism, the message is considered as a duplicate message, and is not indicated to the UE. As a result, the warning is not indicated to the user all the time.

### SUMMARY

This application provides a system switching method, to ensure that when UE is handed over from a 5G network to an EPC network, a PDU session status of the UE is synchronized with that of an EPC, and TAU execution does not fail when the UE is moved to the EPC.

According to a first aspect, an embodiment of this application provides a notification method. The method is: receiving, by a terminal apparatus, first notification information, where the first notification information includes first area information; when the terminal apparatus is not in a first area indicated by the first area information, skipping indicating, by the terminal apparatus to a user, the notification content indicated by the first notification information; and when the terminal apparatus is moved to the first area within a preset time period, indicating, by the terminal apparatus to the user, the notification content indicated by the first notification information.

The first notification information (including warning area coordinates) received outside a specified range (for example, the warning area coordinates) is stored. In this case, within a specific time, when a terminal is moved to the specified range (for example, warning area coordinates), the related notification content is indicated to the user. This avoids a scenario in which users are unable to view notification content when they move out of the specified range from within specified range.

In a possible design, the terminal apparatus receives second notification information; and when the second notification information and the first notification information are duplicate information, and the terminal apparatus has indicated, to the user, the notification content indicated by the first notification information, the terminal apparatus ignores the second notification information.

According to a second aspect, an embodiment of this application provides an apparatus. The apparatus can perform any method provided in the first aspect.

In a possible design, the communications entity has functions of implementing actions of a first communications entity in any method in the first aspect. The functions may be implemented by hardware, or may be implemented by hardware by executing corresponding software. The hardware or the software includes one or more modules corresponding to the foregoing functions.

In a possible design, a structure of the communications entity includes a processor and a transceiver. The processor is configured to support the communications entity in performing corresponding functions in any method in the first aspect, for example, generating, receiving, or processing data and/or information in the foregoing method. The transceiver is configured to: support communication between the communications entity and another entity, and send the information or an instruction in any method in the first aspect to the another entity or receive information or an instruction in any method in the first aspect from the another entity. The communications entity may further include a memory. The memory is configured to be coupled to the processor, and the memory stores a program instruction and data that are necessary for the communications entity.

According to a third aspect, an embodiment of this application provides a computer storage medium, configured to store a computer software instruction used by the communications entity provided in the second aspect. The computer software instruction includes a program designed for executing the first aspect.

According to a fourth aspect, this application further provides a computer program product including an instruction. When the computer program product is run on a computer, the computer is enabled to perform the method in the first aspect. The computer program product includes a computer-executable instruction. The computer-executable instruction is stored in a computer-readable storage medium. A processor of a communications entity may read the computer-executable instruction from the computer-readable storage medium. The processor executes the computer-executable instruction, so that the communications entity performs the steps performed by the communications entity in the method in any one of the foregoing embodiments of this application, or functional units corresponding to the steps are deployed in the communications entity.

According to a fifth aspect, this application further provides a chip system. The chip system includes a processor, configured to support a communications entity in implementing the functions in the foregoing aspects, for example, generating, receiving, or processing data and/or information in the foregoing methods. In a possible design, the chip system further includes a memory. The memory is configured to store a program instruction and data that are necessary for a terminal device. The chip system may include a chip, or may include a chip and another discrete device.

According to a sixth aspect, this application further provides a system, including a network side apparatus and a terminal apparatus. The network side apparatus is configured to send at least one of the first notification information and the second notification information. The terminal apparatus is configured to perform the method in the first aspect.

### BRIEF DESCRIPTION OF DRAWINGS

FIG. 1 is a flowchart of a method according to an embodiment of this application;
FIG. 2 is a schematic interaction diagram of a communication method according to another embodiment of this application;
FIG. 3 is a schematic interaction diagram of a communication method according to another embodiment of this application;
FIG. 4 is a schematic diagram of an apparatus according to this application; and
FIG. 5 is a schematic diagram of a communications entity according to this application.

### DESCRIPTION OF EMBODIMENTS

The following clearly and completely describes the technical solutions in the embodiments of this application with reference to the accompanying drawings in the embodiments of this application.

A network architecture and a service scenario that are described in the embodiments of this application are intended to describe the technical solutions in the embodiments of this application more clearly, and constitute no limitation to the technical solutions provided in the embodiments of this application. A person of ordinary skill in the art may know that with evolution of the network architecture and emergence of new service scenarios, the technical solutions provided in the embodiments of this application are also applicable to similar technical problems.

A terminal apparatus in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, a user apparatus, or a chip in the foregoing apparatuses. The terminal apparatus may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device or a computing device having a wireless communication function or another processing device connected to a wireless modem, a vehicle-mounted device, a wearable device, a terminal apparatus in a future 5G network, a terminal apparatus in a future evolved public land mobile network (Public Land Mobile Network, PLMN), a chip in the foregoing apparatuses, or the like. This is not limited in the embodiments of this application.

A base station in the embodiments of this application may be a device configured to communicate with a terminal apparatus. The base station may be a base transceiver station (Base Transceiver Station, BTS) in a global system for mobile communications (Global System of Mobile communication, GSM) system or a code division multiple access (Code Division Multiple Access, CDMA) system, a NodeB in a wideband code division multiple access (Wideband Code Division Multiple Access, WCDMA) system, an evolved NodeB (Evolutional NodeB, eNB or eNodeB) in an LTE system, a radio controller in a cloud radio access network (Cloud Radio Access Network, CRAN) scenario, or the like. This is not limited in the embodiments of this application.

A network element in the embodiments of this application may include a network device in a 5G system architecture and/or a 4G system architecture or another system architecture. The 4G system architecture may include an EPS system architecture. For example, network elements may include an access and mobility management function (Access and Mobility Management function, AMF) entity, a mobility management entity (Mobility Management Entity, MME), a session management function (Session Management Function, SMF) entity, a unified data management (Unified Data Management, UDM) entity, a policy control function (Policy Control Function, PCF) entity, a policy and charging rule function (Policy and Charging Rule Function, PCRF) entity, a packet data network (Packet Data Network, PDN), a packet data unit (Packet Data Unit, PDU), a PDN gateway for control plane (PDN Gateway-Control plane, PGW-C), and a PDN gateway for user plane (PDN Gateway-User plane, PGW-U), a home subscriber server (home Subscriber Server, HSS), an application function (Application Function, AF) entity, and the like.

The network architecture and the service scenario that are described in the embodiments of this application are intended to describe the technical solutions in the embodiments of this application more clearly, and constitute no limitation to the technical solutions provided in the embodiments of this application. A person of ordinary skill in the art may know that with evolution of the network architecture and emergence of new service scenarios, the technical solutions provided in this application are also applicable to similar technical problems. In this application, nouns "network" and "system" are usually interchangeably used, but meanings of the nouns can be understood by a person skilled in the art.

To facilitate understanding, the following describes some nouns in this application.
(1) An access network or an access network entity is a 5G access network entity or a 4G access network entity, is a device that connects a terminal device to a wireless network, and includes but is not limited to an evolved node B (English: evolved Node B, eNB for short), a radio network controller (English: radio network controller, RNC for short), a NodeB (English: Node B, NB for short), a base station controller (English: Base Station Controller, BSC for short), a base transceiver station (English: Base Transceiver Station, BTS for short), a home NodeB (for example, Home evolved NodeB, or Home Node B, HNB for short), a baseband unit (English: BaseBand Unit, BBU for short), a gNodeB (English: g NodeB, gNB for short), a transmitting and receiving point (English: Transmitting and receiving point, TRP for short), a transmitting point (English: Transmitting point, TP for short), a mobile switching center, and the like. In addition, the access network or access network entity may further include a Wi-Fi access point (English: Access Point, AP for short) and the like, and may further include various forms of macro base stations, micro base stations, relay stations, an access point, a remote radio unit (English: Remote Radio Unit, RRU for short), or the like. In different systems, a device having functions of a base station may have different names. For example, the device is referred to as an evolved NodeB (evolved NodeB, eNB, or eNodeB) in an LTE network, and the device is referred to as a NodeB (Node B) in a 3rd generation (the 3rd Generation, 3G) network.
(3) MME: The MME is a key control node in a 3GPP long term evolution (English: Long Term Evolution, LTE for short) access network. The MME is responsible for positioning and a paging process, including relaying, of UE in an idle mode. Simply, the MME is responsible for control-plane signaling processing. The MME performs bearer activation/modification/deletion procedures and selects an SGW entity for UE when the UE is initialized and connected to the network.
(4) AMF entity: The AMF entity is responsible for access and mobility management; is a termination point of an NG2 interface; terminates a non-access stratum (English: Non-Access Stratum, NAS for short) message, and completes registration management, connection management, reachability management, mobility management, and the like; and transparently routes a session management message to a session management function (English: Session Management Function, SMF for short) entity.
(5) CBE (cell broadcast entity, cell broadcast entity): The CBE is a source of a CBS message, and is responsible for all aspects of formatting CBS messages, including splitting of a CBS message.
(6) CBCF entity: The CBCF entity is a network function in a 5G core network, and is responsible for management of CBS messages, including: allocating serial numbers, modifying or deleting CBS messages held by an NG-RAN node, determining a set of cells to which a CBS message should be broadcast, indicating within the serial number the geographical scope of each CBS message, determining a time at which a CBS message should commence being broadcast, and the like. The CBCF entity supports a service-based interface. The CBCF uses AMF communication services to forward warning messages to the NG-RAN and to subscribe to receive warning delivery related notifications.
(7) PWS (Public Warning System, public warning system)-IWF module: The PWS-IWF module is a logical function whose functionality is to translate from N50 to SBc. The PWS-IWF module may be connected to one or more AMF entities. The PWS-IWF module can interwork with one or more CBCs.

The following explains some common concepts or definitions in the embodiments of this application. It should be noted that some English abbreviations, such as an LTE system, are used as examples in this specification for describing the embodiments of this application, and may vary with evolution of a network. For specific evolution, refer to descriptions in corresponding standards.

In this application, a 4G network may also be referred to as an EPS network, an access network of the 4G network is referred to as an E-UTRAN, and a core network of the 4G network is referred to as an EPC network. A 5G network may also be referred to as a new radio (English: New Radio, NR for short) network, and a 5G system is 5GS for short. A plurality of nouns with a same meaning in this application are used alternately.

The "data" described in this application is usually service data, but may also include content, such as signaling and a message, that needs to be transmitted by a system, for example, a reference signal and an uplink/downlink control message.

The term "and/or" in this application describes only an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

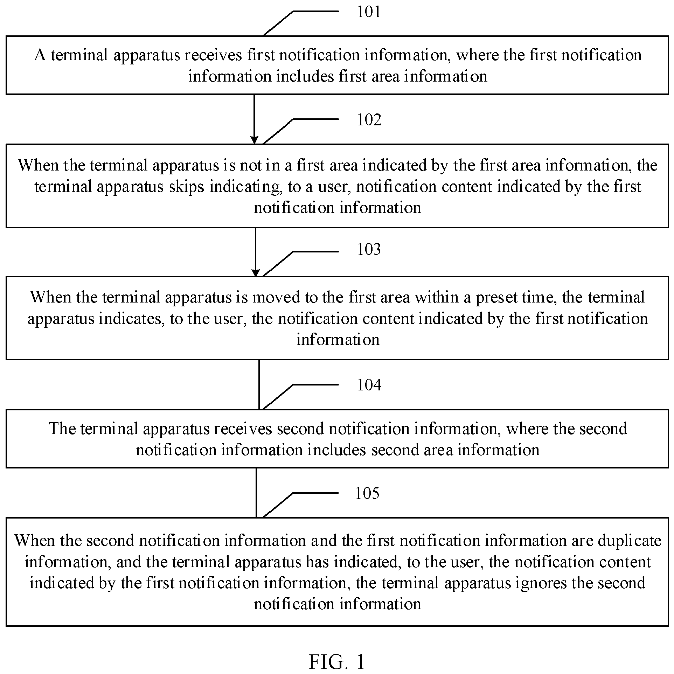

FIG. 1 shows an embodiment of this application, as shown in FIG. 1, the following steps are included.

S101. A terminal apparatus receives first notification information, where the first notification information includes first area information.

The terminal apparatus receives the first notification information from a network side apparatus. The network side apparatus sends the message in a broadcast manner, for example, broadcasts the first notification information in a 4G network by using a system information block type 12 (System Information Block Type 12) message, or broadcasts the first notification information in a 5G network by using a system information block type 8 (System Information Block Type 8) message. The first notification information includes first area information, the first area information is used to indicate a geographical area or a range, and the first area information may be warning area coordinates (Warning Area Coordinates) information.

S102. When the terminal apparatus is not in a first area indicated by the first area information, the terminal apparatus does not indicate, to a user, notification content indicated by the first notification information.

After receiving the first notification information, the terminal apparatus determines whether a location of the terminal is in the first area indicated by the first area information. Optionally, the terminal apparatus may determine a current geographical location of the terminal apparatus based on latest GPS geographical location information stored in the terminal apparatus or based on an accessed network. Then, the first area is compared with the current geographical location of the terminal apparatus, to determine whether the terminal apparatus is located in a range of the first area. Another existing determining manner may also be used for determining.

When a determining result of the terminal apparatus is that the terminal apparatus is not in the first area, the terminal apparatus does not indicate, to the user, the notification content indicated by the first notification information.

In all the embodiments of this application, the notification content may be presented to the user through voice broadcast, by displaying the notification content by a display of the terminal apparatus, or the like. In addition, vibration, ringing, or the like may be further added. If the terminal apparatus is a chip, the terminal apparatus may instruct a display apparatus of a device controlled by the terminal apparatus, to display the notification content. The notification content indicated by the first notification information may include welcome content, warning content, and other precautions that need to be obtained by the user.

In addition, the notification content indicated by the first notification information may be included in the first notification information. Alternatively, the first notification information may be signaling agreed on with the terminal apparatus, and the terminal apparatus generates, based on the signaling, notification content indicated by the signaling.

S103. When the terminal apparatus is moved to the first area within a preset time period, the terminal apparatus indicates, to the user, the notification content indicated by the first notification information.

The preset time period may be duration preset when the terminal apparatus determines not to indicate the notification content to the user in S102. The terminal apparatus stores the first notification information within the duration. Timing of the preset time period may be implemented by a timer (timer). A value of the timer may be the same as that of a duplication detection timer. The duplication detection timer is used to perform duplication detection on warning messages received from a same PLMN within a duplication detection time. The UE does not need to perform duplication detection on messages whose duplication detection time has expired.

When the terminal apparatus is moved to the first area and the preset time period has not expired, the terminal apparatus indicates, to the user, the notification content indicated by the first notification information.

In addition, optionally, the following steps are included.

S104. The terminal apparatus receives second notification information, where the second notification information includes second area information.

For the receiving, by the terminal apparatus, second notification information and a definition of the second notification information, refer to the description of receiving first notification information and the first notification information in S101.

S105. When the second notification information and the first notification information are duplicate information, and the terminal apparatus has indicated, to the user, the notification content indicated by the first notification information, the terminal apparatus ignores the second notification information.

That the second notification information and the first notification information are duplicate information may mean that at least one of area information, a message ID, a serial number, and indicated notification content in the first notification information is the same as that in the second notification information. In this case, the terminal apparatus determines that the second notification information and the first notification information are duplicate information.

That the terminal apparatus ignores the second notification information may be that the terminal apparatus no longer indicates, to the user, the notification content indicated by the second notification information.

Same notification content can be prevented from being repeatedly indicated to the user by determining whether the second notification information and the first notification information are duplicate information. This improves user experience.

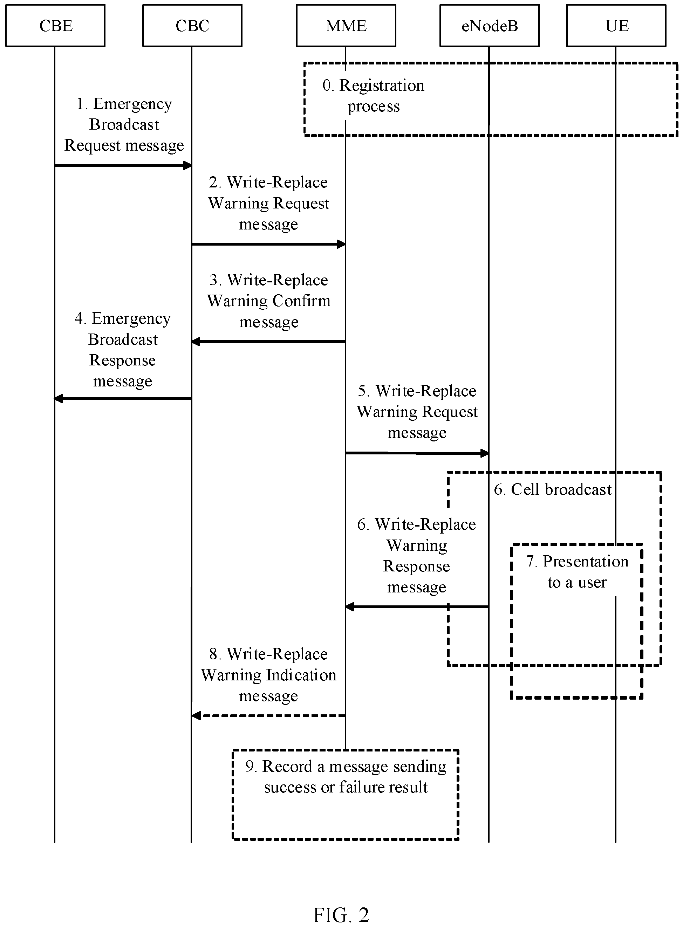

An embodiment in FIG. 2 is an implementation, in a 4G system, using an example in which first notification information or second notification information is new warning information.

The warning information to be broadcast is delivered to a plurality of eNodeBs via the MME. The eNodeBs are responsible for scheduling the broadcast of the new waning information and original warning information in each cell.

0. Network registration and security (for example, authentication) procedures are performed. This step is performed each time UE is attached to a network (for example, after each power on).

1. The CBE (cell broadcast entity, cell broadcast entity) sends emergency information (for example, a "warning type", "warning information", an "impacted area", and a "time period") to the CBC. In this case, the CBC shall authenticate this request.

2. Using the "impacted area" information, the CBC identifies which MMEs need to be contacted and determines the information to be placed into the Warning Area Information Element. The CBC sends a Write-Replace Warning Request message containing the warning message to be broadcast and the delivery attributes (message identifier, serial number, tracking area ID list, warning area, OMC (operation and maintenance centre, operation and maintenance center) ID, CWM Indicator, Send Write-Replace-Warning-Indication, Global eNB ID, warning area coordinates) to the MMEs.

The tracking area ID list is used by only the MME. The MME uses the tracking area ID list for selecting which eNodeBs to forward the Write-Replace Warning Request message to. If the message is sent to cells that an eNodeB instructs to restart, and the CBC has received a restart indication, the CBC shall include the Global eNB ID IE with the identity of this eNodeB in the Write-Replace Warning Request message.

The warning area shall be a list of cell IDs, a list of TAIs, or one or more emergency area IDs. The eNodeB is configured with the TAIs and cell IDs it serves, and the emergency area IDs it belongs to. The eNodeB checks for any match of the content of the warning area with these IDs to identify where to distribute the warning message. The warning area is an optional information element. If the warning area is absent, it shall be interpreted as "all cells on the eNodeB". A quantity of cell IDs will be limited by a message size on SBc and S1-MME. An emergency area ID is unique within the PLMN

The message may include an OMC ID. If present, it indicates the OMC to which the trace record generated in step 9 is destined. Co-location of that OMC with the CBC is an operator option.

The CBC shall set a concurrent warning message (CWM) indicator in all Write-Replace Warning Request messages, if the PLMN supports concurrent warning message broadcasts.

The CBC shall set the Send Write-Replace-Warning Indication message in case the MME is requested to forward the "Broadcast Scheduled Area List" in a Write-Replace Warning Indication for the warning message.

The CBC includes the warning area coordinates in the Write-Replace-Warning Request message based on operator policy.

3. The MME sends a Write-Replace-Warning Request message that indicates to the CBC that the MME has started to distribute the warning message to the eNodeBs.

The Write-Replace Warning Confirm message may contain an Unknown Tracking Area List IE (information element, information element). The Unknown Tracking Area List IE identifies the tracking areas that are unknown to the MME and to which the request cannot be delivered. If this message is not received by the CBC within an appropriate time period, the CBC can attempt to deliver the warning message via another MME in the same pool area.

4. Upon reception of the Write-Replace Confirm messages from the MMEs, the CBC may confirm to the CBE that it has started to distribute the warning message.

5. The MME forwards the Write-Replace Warning Message Request message to the eNodeBs. The MME shall use the tracking area ID list to determine the eNodeBs in the delivery area. If the tracking area ID list is not included and no Global eNB ID has been received from the CBC, the message is forwarded to all eNodeBs that are connected to the MME. If a Global eNB ID has been received from the CBC, the MME shall forward the message only to the eNodeB indicated by the Global eNB ID IE.

6. When S1-flex is used (a connection between a plurality of eNodeBs and a plurality of MMEs), the eNodeB can receive a same message from the plurality of MMEs. The eNodeB detects duplicate messages by checking the message identifier and serial number fields within the warning message. If any redundant messages are detected, only the first one received will be broadcast by the cells. The eNodeB shall use the warning area information to determine the cells in which the message is to be broadcast. The eNodeB returns a warning message response to the MME, even if the warning information was a duplicate. S1 is an interface between the eNB and the MME/SGW. In a 2G/3G network, an RNC can be connected to only one core network element, but the S1-Flex allows one eNB to be connected to a pool (pool) including a plurality of MMEs/SGWs to implement load balancing, redundancy, and the like. Each eNB supports a maximum of 16 interfaces S1. Another important change is an interface X2, that is, a distributed interface between neighboring eNBs. The interface X2 is mainly used for mobility management (handover) and interference suppression of neighboring cells. Each eNB can define 32 interfaces X2. In actual deployment, a quantity of neighboring eNodeBs depends on the coverage, and S1-flex is the connection between a plurality of eNodeBs and a plurality of MMEs.

If there is a warning broadcast message already ongoing and the CWM indicator is included in the Write-Replace Warning Message Request, the eNodeB does not stop an existing broadcast message but start broadcasting a new message concurrently. Otherwise the eNodeB shall immediately replace the existing broadcast message with the newer one.

If concurrent warning messages are not supported, this requires the CBE/CBC to take care that 'lower' priority warnings are not sent while a higher priority warning is still being sent.

The eNodeB determines a message broadcasting frequency according to the attributes set by the CBC that originated the warning message distribution.

7. If the UE has been configured to receive warning messages, and the UE is configured to accept warnings on that PLMN, the UE proceeds as follows:

The UE can use "warning type" values, "earthquake", "tsunami", or "earthquake and tsunami" immediately to alert the user. When the "warning type" is 'test', the UE discards the notification, but the UE specially designed for testing purposes may proceed with the following procedures.

The UE activates reception of the broadcast messages containing the "warning message".

If the warning area coordinates are not present (that is, the broadcast message does not include the warning area coordinates), the UE presents content of the "warning information" to the user.

If the warning area coordinates are present (that is, the broadcast message includes the warning area coordinates), and if the UE is unable to determine its location, the UE indicates content of the "warning information" to the user.

If the warning area coordinates are present and the UE determines it is inside the warning area coordinates, the UE indicates content of the "warning information" to the user.

If the warning area coordinates are present and the UE determines it is outside the warning area coordinates, the UE does not present content of the "warning information" to the user, and performs the following actions:
- storing, by the UE, the warning information not presented to the user, and setting a preset time period; and
- when the UE determines that the UE has entered an area of the warning area coordinates within the preset time period, the UE presents the stored "warning information" to the user.

A value of the timer may be the same as that of a duplication detection timer.

8. If the "Warning-Message-Indication" parameter was present in the Write-Replace Warning Request and it is configured in the MME based on operator policy, the MME shall forward the "Broadcast Scheduled Area Lists" in a "Write-Replace Warning Indication" to the CBC. The "Broadcast Scheduled Area List" IE shall contain the "Broadcast Completed Area List" the MME has received from the eNodeB. The MME may aggregate "Broadcast Completed Area Lists" it receives from eNodeBs.

Support for sending of the Write-Replace Warning Indication to the CBC is optional in the MME.

9. From the Write-Replace Warning Response messages returned by eNodeBs, the MME determines the success or failure of the delivery and creates a trace record. Any OMC ID received in step 2 is written to the trace record to permit the O&M system to deliver them to the desired destination.

### Warning information delivery procedure

Warning information to be broadcast is delivered via AMFs to a plurality of NG-RAN nodes. The NG-RAN nodes are responsible for scheduling broadcast of new warning information and original warning information in each cell.

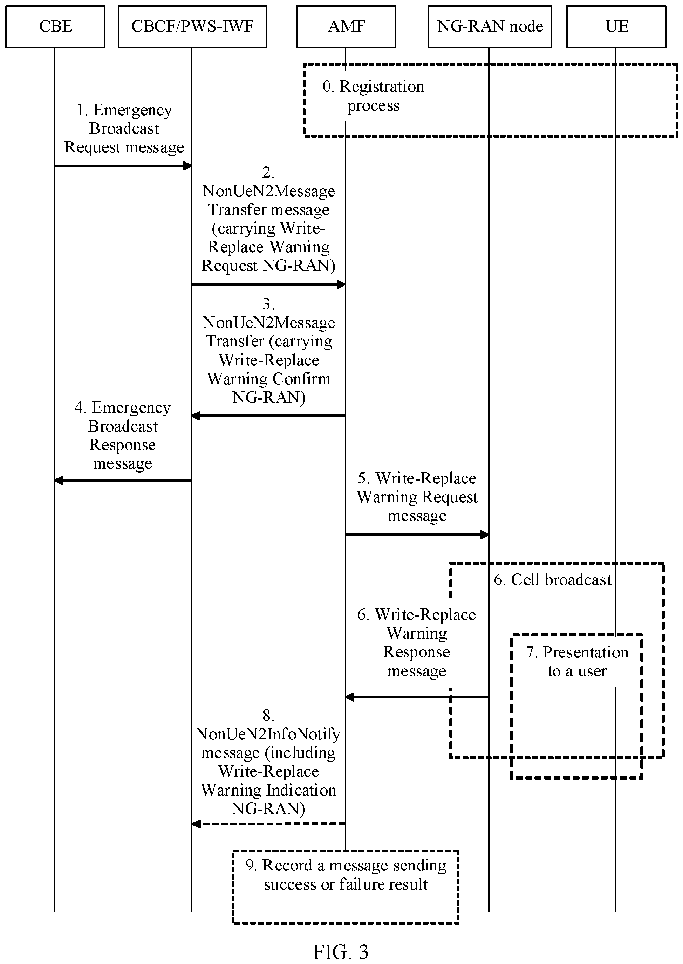

An embodiment in FIG. 3 is an implementation, in a 5G system, using an example in which first notification information or second notification information is new warning information.

The warning information to be broadcast is delivered via AMFs to a plurality of NG-RAN (NG Radio Access Network, NG radio access network) nodes. The NG-RAN nodes are responsible for scheduling the broadcast of the new waning information and original warning information in each cell.

0. Registration and security (for example, authentication) procedures are performed. This step is performed each time UE is attached to a network (for example, after each power on).

1. CBE (an information source such as PSAP or Regulator) sends emergency information (for example, a "warning type", "warning information", an "impacted area", or a "time period") to the CBC. In this case, the CBCF shall authenticate this request.

2. Using the "impacted area" information, the CBCF identifies which AMFs need to be contacted and determines the information to be placed into the Warning Area Information Element. The CBCF sends a Write-Replace Warning Request message containing the warning message to be broadcast and the delivery attributes (Message Identifier, Serial Number, Tracking Area ID list, Warning Area, OMC ID, CWM Indicator, Send Write-Replace-Warning-Indication, Global RAN Node ID, Warning Area Coordinates) to AMFs.

The tracking area ID list is only used by the AMF. The AMF uses the tracking area ID list for selecting which NG-RAN nodes to forward the Write-Replace Warning Request NG-RAN message to.

If the message is sent to cells that an eNodeB instructs to restart, and the CBCF has received a restart indication (see subclause 15A.1 of TS 23.007 [38]), the CBCF shall include the Global RAN Node ID IE with this NG-RAN node in the Write-Replace Warning Request message.

The warning area shall be a list of cell IDs, a list of TAIs, or one or more emergency area IDs. The warning area is only used by the NG-RAN node. The NG-RAN node is configured with the TAIs and cell IDs it serves, and the emergency area IDs it belongs to. The NG-RAN node checks for any match of the content of the warning area with these IDs to identify where to distribute the warning message. The warning area is an optional information element. If the warning area is absent, it shall be interpreted as "all cells on the NG-RAN node". A quantity of cell IDs will be limited by a message size on N50 and N2. An emergency area ID is unique within the PLMN

The message may include an OMC ID. If present, it indicates the OMC to which the trace record generated in step 9 is destined. Co-location of that OMC with the CBCF is an operator option.

The CBCF shall set a concurrent warning message (CWM) indicator in all Write-Replace Warning Request NG-RAN messages, if the PLMN supports concurrent warning message broadcasts.

The CBCF shall not include "digital signature" or "timestamp" information.

TBCF shall set the Send Write-Replace-Warning Indication NG-RAN message in case the AMF is requested to forward the "Broadcast Scheduled Area List" in a Write-Replace Warning Indication NG-RAN for the warning message.

The CBCF includes the warning area coordinates in the Write-Replace-Warning Request-NG-RAN message based on operator policy.

3. The AMF sends a Write-Replace Warning Confirm NG-RAN message that indicates to the CBCF that the AMF has started to distribute the warning message to the NG-RAN nodes.

The Write-Replace Warning Confirm NG-RAN message may contain an Unknown Tracking Area List IE. The Unknown Tracking Area List IE identifies the tracking areas that are unknown to the AMF and to which the request cannot be delivered.

If this message is not received by the CBCF within an appropriate time period, the CBCF can attempt to deliver the warning message via another AMF in the same pool area.

4. Upon reception of the Write-Replace Confirm messages NG-RAN message from the AMFs, the CBCF may confirm to the CBE that it has started to distribute the warning message.

5. The AMF forwards the Write-Replace Warning Message Request NG-RAN message to the NG-RAN nodes. The AMF shall use the tracking area ID list to determine the eNodeBs in the delivery area. If the tracking area ID list is not included and no Global RAN Node ID has been received from the CBCF, the message is forwarded to all NG-RAN nodes that are connected to the MME. If a Global RAN Node ID has been received from the CBCF, the AMF shall forward the message only to the NG-RAN node indicated by the Global RAN Node ID IE.

6. When the CBCF sends warning information to a plurality of AMFs for the same warning area, the NG-RAN node may receive the same message from the plurality of AMFs. The NG-RAN node detects duplicate messages by checking the message identifier and serial number fields within the warning messages. If any redundant messages are detected, only the first one received will be broadcast by the cells. The NG-RAN node shall use the warning area information to determine the cells in which the message is to be broadcast. The NG-RAN nodes return a warning message response to the AMF, even if the warning information was a duplicate.

If there is a warning broadcast message already ongoing and the CWM indicator is included in the Write-Replace Warning Request NG-RAN message, the NG-RAN node does not stop the existing broadcast message but starts broadcasting the new message concurrently. Otherwise, the NG-RAN node shall immediately replace the existing broadcast message with the newer one.

NOTE 2: If concurrent warning messages are not supported, this requires the CBE/CBCF to take care that 'lower' priority warnings are not sent while a higher priority warning is still being sent.

The NG-RAN node broadcasts the message frequently according to the attributes set by the CBCF that originated the warning message distribution.

7. If the UE has been configured to receive warning messages, and the UE is configured to accept warnings on that PLMN (see 3GPP TS 31.102 [18]), the UE proceeds as follows:

The UE can use "warning type" values, "earthquake", "tsunami", or "earthquake and tsunami" immediately to alert the user. When "warning type" is 'test', the UE discards the message, but the UE specially designed for testing purposes may proceed with the following procedures.

The UE activates reception of the broadcast messages containing the "warning message".

If the warning area coordinates are not present,
the UE presents content of the "warning information" to the user.

If the warning area coordinates are present, and if the UE is unable to determine its location,
the UE presents content of the "warning information" to the user.

If the warning area coordinates are present and the UE determines it is inside the warning area coordinates,
the UE presents content of the "warning information" to the user.

If the warning area coordinates are present, and the UE determines it is outside the warning area coordinates,
the UE does not present content of the "warning information" to the user, and performs the following actions:
- storing, by the UE, the warning information not presented to the user, and setting a preset time period; and
- when the UE determines that the UE has entered an area of the warning area coordinates within the preset time period, the UE presents the stored "warning information" to the user.

A value of a presentation control timer shall be the same as that of the duplication detection timer as specified in subclause 8.2.

8. If the "Warning-Message-Indication NG-RAN" parameter is included in the Write-Replace Warning Request NG RAN message and is configured in the MME based on operator policy, the MME shall forward the "Broadcast Scheduled Area Lists" in a "Write-Replace Warning Indication NG-RAN" to the CBCF. The "Broadcast Scheduled Area List" shall contain the "Broadcast Completed Area List" the AMF has received from the NG-RAN node. The AMF may aggregate "Broadcast Completed Area Lists" it receives from NG-RAN nodes.

NOTE 3: Support for sending of the Write-Replace Warning Indication to the CBCF is optional in the AMF.

9. From the Write-Replace Warning Response messages returned by the NG-RAN nodes, the AMF determines the success or failure of the delivery and creates a trace record. Any OMC ID received in step 2 is written to the trace record to permit the O&M system to deliver them to the desired destination.

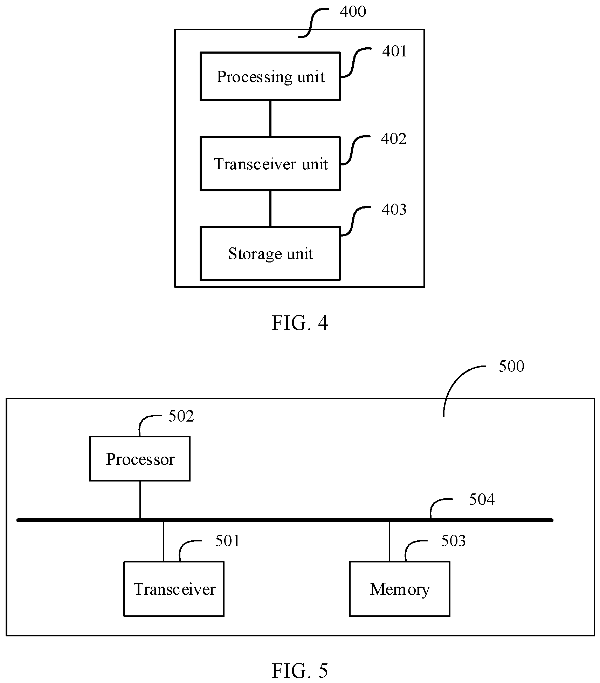

FIG. 4 is a schematic block diagram of a terminal apparatus 400 according to an embodiment of this application. It should be understood that the terminal apparatus 400 can perform the steps performed by the terminal apparatus in the method in anyone of FIG. 1 to FIG. 3. To avoid repetition, details are not described herein again. The terminal apparatus 400 includes a processing unit 401 and a transceiver unit 402, and may further include a storage unit 403.

The transceiver unit 402 is configured to receive first notification information and second notification information.

The processing unit 401 is configured to: when the terminal apparatus is not in a first area indicated by first area information, determine not to indicate, to a user, notification content indicated by the first notification information; and when the terminal apparatus is moved to the first area within a preset time period, determine to indicate, to the user, the notification content indicated by the first notification information.

The processing unit 401 is further configured to determine whether the first notification message and the second notification message are duplicate messages.

In the foregoing embodiments provided in this application, the parameter determining methods provided in the embodiments of this application are described separately from perspectives of the network elements and interaction between the network elements. It may be understood that, to implement the foregoing functions, network elements, such as a terminal device (for example, UE) and a network device (for example, a base station), include corresponding hardware structures and/or software modules for performing the functions. A person skilled in the art should easily be aware that, in combination with units and algorithm steps of the examples described in the embodiments disclosed in this specification, this application can be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

Based on a same inventive concept, an embodiment of this application further provides a terminal apparatus 500. As shown in FIG. 5, the terminal apparatus 500 includes at least a transceiver 501 and a processor 502; may further include a memory 503; and may further include a bus 504.

The processor 502, the memory 503, and the transceiver 501 are all connected by using the bus 504.

The memory 503 is configured to store a computer-executable instruction.

The processor 502 is configured to execute the computer-executable instruction stored in the memory 503.

The processor 502 executes the computer-executable instruction stored in the memory 503, so that the terminal apparatus 500 performs the steps performed by the terminal apparatus in any one of the foregoing embodiments of this application.

The processor 502 may include processors of different types, or include processors of a same type. The processor 502 may be any one of the following devices with a computing processing capability: a central processing unit (English: Central Processing Unit, CPU for short), an ARM processor (English full name of AMR: Advanced RISC Machines, English full name of RISC: Reduced Instruction Set Computing), a field programmable gate array (English: Field Programmable Gate Array, FPGA for short), and a dedicated processor. In an optional implementation, the processor 502 may be integrated as a many-core processor.

The memory 503 may be any one or any combination of the following storage media: a random-access memory (English: Random Access Memory, RAM for short), a read-only memory (English: read only memory, ROM for short), a non-volatile memory (English: non-volatile memory, NVM for short), a solid-state drive (English: Solid State Drives, SSD for short), a mechanical hard disk, a magnetic disk, a disk array, and the like.

The bus 504 may include an address bus, a data bus, a control bus, and the like. For ease of denotation, the bus is represented by using a thick line in FIG. 5. The bus 504 may be any one or any combination of the following components used for wired data transmission: an industry standard architecture (English: Industry Standard Architecture, ISA for short) bus, a peripheral component interconnect (English: Peripheral Component Interconnect, PCI for short) bus, an extended industry standard architecture (English: Extended Industry Standard Architecture, EISA for short) bus, and the like.

An embodiment of this application provides a computer-readable storage medium. The computer-readable storage medium stores a computer-executable instruction. A processor of a terminal device executes the computer-executable instruction, so that a communications entity performs the steps performed by a first communications entity in the foregoing parameter determining method provided in this application, or functional units corresponding to the steps are deployed in a communications entity.

An embodiment of this application provides a computer-readable storage medium. The computer-readable storage medium stores a computer-executable instruction. A processor of a communications entity executes the computer-executable instruction, so that the communications entity performs the steps performed by a third communications entity in the foregoing parameter determining method provided in this application, or functional units corresponding to the steps are deployed in the communications entity.

An embodiment of this application provides a computer program product. The computer program product includes a computer-executable instruction, and the computer-executable instruction is stored in a computer-readable storage medium. A processor of a communications entity may read the computer-executable instruction from the computer-readable storage medium. The processor executes the computer-executable instruction, so that a terminal device performs the steps performed by a first communications entity in the foregoing methods provided in any one of the embodiments of this application, or functional units corresponding to the steps are deployed in the communications entity.

An embodiment of this application provides a computer program product. The computer program product includes a computer-executable instruction, and the computer-executable instruction is stored in a computer-readable storage medium. A processor of a communications entity may read the computer-executable instruction from the computer-readable storage medium. The processor executes the computer-executable instruction, so that the communications entity performs the steps performed by a third communications entity in the foregoing methods provided in the embodiments of this application, or functional units corresponding to the steps are deployed in the communications entity.

This application further provides a chip system. The chip system includes a processor, configured to support a communications entity in implementing the functions in the foregoing aspects, for example, generating, receiving, or processing the data and/or information in the foregoing methods. In a possible design, the chip system further includes a memory. The memory may be configured to store a program instruction and data that are necessary for a terminal device. The chip system may include a chip, or may include a chip and another discrete device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (English: Digital Subscriber Line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (English: Solid State Disk, SSD for short)), or the like.

A person skilled in the art may further understand that various illustrative logical blocks (illustrative logic block) and steps (step) that are listed in this application may be implemented by using electronic hardware, computer software, or a combination thereof. Whether the functions are implemented by using hardware or software depends on particular applications and a design requirement of the entire system. A person of ordinary skill in the art may use various methods to implement the described functions for each particular application, but it should not be considered that the implementation goes beyond the scope of this application.

Various illustrative logical units and circuits described in this application may implement or operate the functions by using a general purpose processor, a digital signal processor, an application-specific integrated circuit (English: application specific integrated circuit, ASIC for short), a field-programmable gate array (English: Field-Programmable Gate Array, FPGA for short) or another programmable logic apparatus, a discrete gate or transistor logic, a discrete hardware component, or a design of any combination of the foregoing devices. The general purpose processor may be a microprocessor. Optionally, the general purpose processor may alternatively be any traditional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

The steps of the methods or algorithms described in this application may be directly embedded into hardware, a software unit executed by a processor, or a combination thereof. The software unit may be stored in a random-access memory (English: Random-Access Memory, RAM for short), a flash memory, a read-only memory (English: Read-Only Memory, ROM for short), an erasable programmable read-only memory (English: Erasable Programmable Read Only Memory, EPROM for short), a register, a hard disk, a mobile disk, a compact disc read-only memory (English: Compact Disc Read-Only Memory, CD-ROM for short), or any other form of storage medium in the art. For example, the storage medium may be connected to the processor, so that the processor may read information from a storage medium and write information to the storage medium. Optionally, the storage medium may alternatively be integrated into the processor. The processor and the storage medium may be disposed in the ASIC. The ASIC may be disposed in a terminal device or a network device. Optionally, the processor and the storage medium may alternatively be disposed in different components in a terminal device or a network device.

In one or more examples of designs, the functions described in this application may be implemented by using hardware, software, firmware, or any combination thereof. If the functions are implemented by using software, these functions may be stored in a computer-readable medium or transmitted on a computer-readable medium in a form of one or more instructions or code. The computer-readable medium includes a computer storage medium or a communications medium that enables a computer program to move from one place to another place. The storage medium may be any available medium accessible by a general purpose computer or a special computer. For example, such a computer-readable medium may include but is not limited to a RAM, a ROM, an EEPROM, a CD-ROM, or another optical disc storage, a disk storage or another magnetic storage apparatus, or any other medium that may be used to carry or store program code in a form of an instruction or a data structure and another form readable by a general purpose computer or a special computer or a general purpose processor or a special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in the defined computer-readable medium. The disk (disk) and the disc (disc) include a compact disc, a laser disc, an optical disc, a digital versatile disc (English: Digital Versatile Disc, DVD), a floppy disk, and a Blu-ray disc. The disc usually copies data by a magnetic means, and the disk optically copies data by a laser means. The foregoing combination may alternatively be included in the computer-readable medium.

A person skilled in the art should be aware that, in the foregoing one or more examples, the functions described in this application may be implemented by hardware, software, firmware, or any combination thereof. When this application is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another place. The storage medium may be any available medium accessible by a general purpose computer or a dedicated computer.

The objectives, technical solutions, and advantageous effects of this application are further described in detail in the foregoing specific implementations. It should be understood that the foregoing descriptions are merely specific implementations of this application, but are not intended to limit the protection scope of this application. Any modification, equivalent replacement, or improvement made based on technical solutions of this application shall fall within the protection scope of this application. According to the foregoing description of this specification in this application, any content of technologies in the art that can be used or can be used to implement this application and any modification based on the disclosed content shall be considered obvious in the art. The basic principles described in this application may be applied to other variations without departing from the essence and scope of this application. Therefore, the content disclosed in this application is not limited to the described embodiments and designs, but may also be extended to a maximum scope that is consistent with the principles and disclosed new features of this application.

## Claims

1. A communication method, wherein the method comprises:
receiving, by a terminal apparatus, first notification information, wherein the first notification information comprises first area information;
in case that the terminal apparatus is not in a first area indicated by the first area information, skipping indicating, by the terminal apparatus to a user, notification content indicated by the first notification information; and
in case that the terminal apparatus moves to the first area within a preset time period, indicating, by the terminal apparatus to the user, the notification content indicated by the first notification information.

2. The method according to claim 1, wherein the method further comprises:
receiving, by the terminal apparatus, second notification information; and
in case that the second notification information and the first notification information are duplicate information, and the terminal apparatus has indicated, to the user, the notification content indicated by the first notification information, ignoring, by the terminal apparatus, the second notification information.

3. The method according to claim 1 or 2, wherein
the notification content indicated by the first notification information and notification content indicated by the second notification information are warning content.

4. An apparatus, configured to perform the method according to any one of claims 1 to 3.

5. An apparatus, comprising a memory and a processor, wherein the memory is configured to store an instruction; and the processor is configured to execute the instruction, so that the method according to any one of claims 1 to 3 is performed.

6. A system, comprising a network side apparatus and a terminal apparatus, wherein the network side apparatus is configured to send at least one of the first notification information and the second notification information; and the terminal apparatus is configured to perform the method according to any one of claims 1 to 3.

7. A computer-readable storage medium, comprising a computer instruction, wherein when the computer instruction is run on a computer, the method according to any one of claims 1 to 3 is performed.
